# EUROPEAN PATENT APPLICATION

(11) **EP 4 793 677 A1**
(43) Date of publication of application: **19.08.2026**
(21) Application number: 25158367.0
(22) Date of filing: 17.02.2025
(51) Int. Cl.: G02B 5/08

(54) **MIRROR ARRANGEMENT FOR AN OPTICAL RESONATOR FOR EXAMINING AND/OR MANIPULATING A SAMPLE, OPTICAL RESONATOR AND METHOD FOR EXAMINING AND/OR MANIPULATING A SAMPLE**

(71) Applicant: Qlibri GmbH, 80335 Munich (DE)
(72) Inventor: Dr. Hümmer, Thomas, 86163 Augsburg (DE)
(74) Representative: Hofstetter, Schurack & Partner

(57) **Abstract**

A mirror arrangement (1) for an optical resonator (13) for examining and/or manipulating a sample (2) comprises a substrate (3) and a stack of material layers (4) arranged on a surface (7) of the substrate (3) and forming an optical reflector. The stack of material layers (4) includes a plurality of dielectric layers (5) and the stack of material layers (4) comprises an electrically conductive layer (6).

## Description

The present invention is directed to a mirror arrangement for an optical resonator for examining and/or manipulating a sample, wherein the mirror arrangement comprises a substrate and a stack of material layers arranged on a surface of the substrate and forming an optical reflector. The invention is further directed to a corresponding optical resonator and a method for examining and/or manipulating a sample.

Optical cavities formed by two opposing mirrors are known as tools to enhance the interaction between light and matter by forming an optical resonator. In general, only light with certain wavelengths may pass, enter or transmit the resonator, in which case the light is said to be in resonance with the optical cavity, while other wavelengths are blocked. The spectral separation between wavelengths that may pass the cavity is denoted as free spectral range, FSR, and is mainly determined by a distance between the two opposing mirrors forming the resonator.

For macroscopic cavities, where the mirror separation is large compared to the wavelength of light, the corresponding FSR is relatively small. For microscopic cavities, however, the cavity length approaches the order of magnitude of the wavelength of light and correspondingly the FSR attains larger values. In such scenarios, individual cavity resonances may be singled out by optical filtering techniques. When investigating samples that are introduced into the microscopic cavity, the properties of such individual resonances are of interest. The publication D. Hunger et al.: "A fiber Fabry-Perot cavity with high finesse." New Journal of Physics 12, 065038 (2010) describes a fiber-based Fabry-Perot micro-cavity with CO2 laser-machined mirrors.

Furthermore, coupling samples like atoms, ions or defects in solids or low dimensional materials or quantum dots in the light field trapped between mirrors is desirable in many fields of quantum computation, quantum sensing, analysis of nano-particles, analysis of low dimensional materials, quantum communication and in general for fundamental science and optical applications.

The application performance often increases with shorter distance between the two mirrors because the light is stronger confined, as well as for higher reflective mirrors because light is trapped for a longer time and therefore also interacts with the sample longer time.

One central problem is that the surfaces of commonly used ultra high-reflective mirrors, for example with a reflectivity of 99.5% or higher or even 99.9% or higher, are dielectric and may lead to unwanted charges being trapped. This leads to unwanted electric fields and electric field fluctuations.

It is an objective of the present invention to reduce unwanted electric fields and/or electric field fluctuations in an optical resonator, in particular an optical resonator with a microscopic cavity, while, in particular, a high reflectivity of the optical resonator's mirrors shall be maintained.

According to an aspect of the invention, a mirror arrangement for an optical resonator for examining and/or manipulating a sample is provided. The mirror arrangement comprises a substrate and a stack of material layers. The stack of material layers is arranged on a surface of the substrate and forms an optical reflector, also denoted as mirror. The stack of material layers includes a plurality of dielectric layers, and the stack of material layers comprises an electrically conductive layer.

An optical resonator comprises, in particular, two mirror arrangements that are arranged with respect to each other to form an optical cavity, in particular an optical micro-cavity. In particular, each of the two mirror arrangements comprises an optical reflector and the optical reflectors are arranged opposite to each other such that light that is coupled into the region between the two optical reflectors may be reflected, in particular multiple times, between the two optical reflectors. A sample may be placed into the optical cavity, for example by placing the sample onto one of the optical reflectors or by suspending the sample in the cavity. The sample may therefore interact with the light coupled into the cavity. In this way, the sample may be manipulated. Alternatively or in addition, the sample may be examined, for example by measuring and analyzing reflected, transmitted, and/or scattered portions of the light.

Here and in the following, light may be understood such that it comprises electromagnetic waves in the visible range, in the infrared range and/or in the ultraviolet range. Accordingly, the expression optical may be understood to be related to light according to this meaning.

The substrate may for example be an optical substrate. The optical substrate is, in particular, suitable for optical purposes. The optical substrate is not necessarily transparent or permeable for light. However, in some implementations, the optical substrate may be permeable at least for light with a wavelength within one or more target wavelength ranges, which may depend on the desired application and/or properties of the optical cavity. For example, the optical substrate may be permeable for light with a wavelength in the range [280 nm, 3000 nm] or within one or more sub-ranges, such as [600 nm, 900 nm], and/or individual wavelengths therein, for example, 780 nm.

The optical substrate being permeable to light of a certain wavelength may be understood such that light of said wavelength may pass through the material of the optical substrate. In particular, the material of the optical substrate may be considered transparent for the light. Obviously, however, the permeability of the material of the optical substrate for the light does not mean that the transmission coefficient for the light is necessarily equal to 100 %. Rather, the transmission coefficient depends on the emission wavelength spectrum and the exact choice of the material composition as well as geometrical properties of the optical substrate and the design and materials of the stack of material layers.

The transmission coefficient may for example be understood as an inverse ratio of a light intensity of light entering the material of the optical substrate to the intensity of the light leaving the material of the optical substrate on an opposite side. For example, the optical substrate can be considered permeable for light of a certain wavelength, if the transmission coefficient is 50 % or larger, for example 80 % or larger, in particular 85 % or larger, preferably 90 % or larger.

The substrate may for example be a mesa structure. The substrate may, in particular, comprise or consist of silicon dioxide, also denoted as silica, or a plastic material. The substrate may for example be a flat substrate or plane. For example, flat substrates with a thickness in the range [100 µm, 6 mm] and lateral dimensions in the range [100µm, 40 mm] may be used.

However, in alternative implementations, the substrate is an optical fiber. The optical fiber may be a single-core fiber comprising exactly one fiber core. In other implementations, the optical fiber may be a dual-core fiber comprising exactly two fiber cores or a multi-core fiber comprising more than two fiber cores. For example, the fiber core or fiber cores of the optical fiber have a diameter in the range [2 µm, 600 µm] or in the range [4 µm, 120 µm]. For example, the fiber core may be surrounded by a cladding layer. The optical fiber may also be a photonic-crystal fiber or a no-core fiber or a gradient index fiber or a multimode fiber in some implementations.

The surface of the substrate may be plane or may have another surface profile, for example a concave surface profile or a combination of a concave surface profile with other surface profiles. In some embodiments, a plane or concave surface profile in the center of the surface of the substrate is surrounded by an angled linear profile. The surface profile of the substrate may, at least in part, carry over to a surface profile of the stack of material layers.

The surface of the substrate is, in particular, a surface facing the optical cavity or the mirror of the other mirror arrangement when the optical resonator is assembled.

The stack of material layers may be understood, for example, as a plurality of adjacent material layers. In particular, the stack of material layers or, in other words, the optical reflector, may form a distributed brag reflector, DBR.

The individual material layers of the stack of material layers including the plurality of dielectric layers and the electrically conductive layer may be manufactured by using different known techniques. These techniques include, for example chemical vapor deposition, physical vapor deposition, in particular sputter deposition, spray coating, magneton sputtering, ion beam sputtering, et cetera as well as combinations and/or variants thereof.

The plurality of dielectric layers may form a single stack of dielectric layers. In this case, the electrically conductive layer is arranged adjacent to stack of dielectric layers, in particular on a side of the stack of material layers facing away from the substrate. Alternatively, the plurality of dielectric layers may comprise a stack of dielectric layers and at least one further dielectric layer. The electrically conductive layer may be arranged between the stack of dielectric layers and the at least one further dielectric layer. In both cases, the stack of dielectric layers may comprise dielectric layers made of at least two different materials with different refractive indices. Dielectric layers with different, in particular high and low refractive index, may be arranged alternatingly within the stack of dielectric layers to realize the optical reflector or DBR, respectively.

Materials used for the dielectric layers may include oxides, for example niobium pentoxide, Nb2O5, silicon dioxide, SiO2, tantalum pentoxide, Ta2O5, hafnium dioxide, HfO2, zirconium dioxide, ZrO2, or aluminum oxide, Al2O3. Depending on the relevant wavelengths, other dielectric materials that can be used include for example indium gallium arsenide, InGaAs, aluminum gallium arsenide, AlGaAs, gallium arsenide, GaAs, aluminum arsenide, AlAs, Pb1-xEuxTe, or europium telluride, EuTe. Also meta surfaces may be used as reflective layers. According to several implementations, a first material portion of the optical substrate, for example of the optical fiber, in particular of the fiber core, is removed due to laser ablation by applying the sequence of multiple laser shots.

An electrical conductivity of the electrically conductive layer is, in particular, larger than a respective electrical conductivity of the dielectric layers. For example, the electrical conductivity of the electrically conductive layer may be greater than 2*10⁴/(Ω m) or greater than 5*10⁴/(Ω m) or greater than 10⁵/(Ω m).

The electrically conductive layer may for example comprise or consist of graphene, a metal, a semiconductor, in particular a doped semiconductor, or a transparent electrically conductive material such as indium tin oxide, ITO, fluorine doped SnO2, FTO, aluminum doped ZnO, AZO, or antimony doped tin oxide, ATO.

By providing the electrically conductive layer in addition to the plurality of dielectric layers in the stack of material layers, it is avoided that charges are trapped in the stack of material layers or on top of the stack of material layers. Thus, unwanted electrical fields or field fluctuations due to such trapped charges are avoided. Consequently, the cavity length of the optical cavity can be further reduced allowing a stronger coupling of the light's electromagnetic field with the sample, which is particularly beneficial when an ion trap or the like shall be realized. This may be achieved, in particular, without detrimental effects on the sample, such as a reduced coherence, linewidth shifts, decay, et cetera.

It is noted that the stack of material layers may comprise one or more further electrically conductive layers in some embodiments.

According to several embodiments, at least a part of the surface of the substrate is a concave surface part.

In other words, the surface may be completely concave or it may be composed of the concave surface part and one or more further surface parts, which may be concave or non-concave, for example plane. Consequently, also the stack of material layers has a corresponding surface profile, which is at least in part concave.

The surface profile or a part of it being concave can be understood for example such that at least a part of the surface lies below other parts of the surface. In particular, the surface profile comprises at least one indentation, which may also be denoted as depression or impression. A respective depth of the indentation or indentations may for example range from a few tens of nm to a few micrometers, for example lie in the range [10 nm, 100 µm] or in the range [100 nm, 7 µm].

The concave or partially concave surface profile has the advantage that light coupled into the cavity is reflected more often inside the cavity compared to a completely plane surface profile. Thus, the dwell time of the light inside the cavity and consequently also the time the light is interacting with the sample is increased.

According to several embodiments, a maximum radius of curvature of the concave surface part is 1000 µm or less or 500 µm or less.

In other words, a radius of curvature to the radius of curvature of the concave surface part lies in the range ]0, Rₘₐₓ], wherein the radius of curvature is not necessarily constant over the concave surface part, and wherein Rₘₐₓ ≤ 1000 µm or Rₘₐₓ ≤ 500 µm. For example, 2 µm ≤ Rₘₐₓ ≤ 1000 µm or 5 µm ≤ Rₘₐₓ ≤ 500 µm. For example, the radius of curvature of the concave surface part lies in the range [Rₘᵢₙ, Rₘₐₓ], wherein 2 µm ≤ Rₘᵢₙ < Rₘₐₓ or 5 µm ≤ Rₘᵢₙ < Rₘₐₓ.

Thereby, the light may be more confined in the cavity and may therefore interact more strongly with the sample. In general, a smaller radius of curvature allows for easier adjustment since the angle between the mirrors does not have to be adjusted as precisely to prevent the light from being lost prematurely.

According to several embodiments, the electrically conductive layer is a final layer of the stack of material layers and is arranged on a side of the stack of material layers opposite to the substrate.

In other words, when the optical resonator is assembled, the electrically conductive layer directly faces the cavity. Thus, the effectivity of the electrically conductive layer is improved. Furthermore, manufacturing the material layer stack is simplified since first the plurality of dielectric layers may be deposited to the substrate and then the electrically conductive layer. Thus, different deposition techniques may be used for the plurality of dielectric layers and the electrically conductive layer without repeatedly changing the technique and/or equipment used for the deposition.

According to several embodiments, the stack of material layers comprises at least one protection layer, wherein one of the at least one protection layer is a final layer of the stack of material layers and is arranged on a side of the stack of material layers opposite to the substrate. The electrically conductive layer is adjacent to the at least one protection layer.

In other words, the electrically conductive layer is arranged between the at least one protection layer, which directly faces the cavity, and the plurality of dielectric layers or a respective part of the plurality of dielectric layers. The at least one protection layer may also be a part or subset or stack of the plurality of dielectric layers, which simplifies the manufacturing of the stack of material layers. In particular, in case the at least one protection layer comprises two or more protection layers, the two or more protection layers are adjacent to each other. The at least one protection layer may also be at least one semiconductor layer, for example.

In such embodiments, the electrically conductive layer and, for example, further deeper lying layers of the stack of material layers, are protected from external influences and/or from outgassing in a vacuum environment or other damages.

According to several embodiments, the electrically conductive layer is arranged at a position such that an intensity of an electromagnetic field in the optical resonator, in particular in the cavity of the optical resonator, is less than F % of a maximum intensity of the electromagnetic field, wherein F ≤ 30 or F ≤ 20 or F ≤ 10.

For example, F lies in the range ]0, 30] or in the range ]0, 20] or in the range ]0, 10] or in the range [0.0001, 10] or in the range [0.0001, 5].

Therefore, light absorption and/or light scattering by the electrically conductive layer is reduced.

It is noted that a single mirror defines how light is reflected by it, so light forms a standing wave in front of it when light is radiated onto it. If one adds a second mirror, a resonator is formed. To achieve resonance, that is when the distance between the mirrors is adjusted so that a constructive superposition of the light circulating between them is obtained, the field that is formed from many reflections is set in the same way as for a single reflection. Thus, the position of the field intensity minimum, which is, in particular given by a position of a node of the respective standing wave, is defined already by a single mirror.

In particular, in the whole spatial region where the electrically conductive layer is present, the intensity of the electromagnetic field in the optical resonator is less than 30 % or less than 20 % or less than 10 % of the maximum intensity. This may, for example, be achieved by positioning the electrically conductive layer such that a local intensity minimum of the electromagnetic field in the optical resonator lies inside the electrically conductive layer and, in particular, choosing a thickness of the electrically conductive layer accordingly, such that the 10 % of the maximum intensity is not exceeded.

According to several embodiments, a maximum thickness of the electrically conductive layer is 100 nm or less.

For example, the maximum thickness of the electrically conductive layer may lie in the range [0.1 nm, 100 nm] or in the range [0.1 nm, 10 nm].

By using such a small thickness, the light absorption and/or light scattering by the electrically conductive layer is further reduced. Furthermore, in combination with embodiments, wherein it is provided that the electrically conductive layer is arranged at a position such that the intensity of an electromagnetic field is particularly low, in particular in the intensity minimum, as described above, the position of the electrically conductive layer may be adapted such that the average field intensity in the region occupied by the electrically conductive layer is particularly low or even virtually equal to zero. Thereby, light absorption and/or light scattering by the electrically conductive layer is further reduced.

According to several embodiments, or the maximum thickness is equal to or less than a tenth of a predefined wavelength of light for examining and/or manipulating the sample.

In other words, a predefined wavelength, for example in the range [280 nm, 3000 nm] or in the range [600 nm, 900 nm], may be provided and the maximum thickness of the electrically conductive layer is equal to a tenth of a predefined wavelength.

In such embodiments, light absorption and/or light scattering by the electrically conductive layer is further reduced due to the low thickness of the electrically conductive layer.

According to several embodiments a thickness of the electrically conductive layer in a center region of the electrically conductive layer is less than a thickness of the electrically conductive layer outside of the center region.

In other words, there is a predefined center region around a center of the electrically conductive layer, the center region is surrounded by a surrounding region of the electrically conductive layer, and the thickness of the electrically conductive layer in the center region is less than in the surrounding region. This may for example be achieved by spray deposition of the electrically conductive layer and/or structuring the electrically conductive layer after its deposition, for example by e-beam lithography, laser ablation, resist structured etching et cetera.

In case of a plane surface profile, the center may correspond to a geometrical center of the substrate, for example a center of a circle in case of a circular lateral profile of the substrate, for example a circular optical fiber or a circular mesa substrate, or the intersection of diagonals in case of a rectangular lateral profile, for example a rectangular mesa substrate.

Consequently, the absorption and/or scattering of light by the electrically conductive layer is further reduced in the center region. This is particularly beneficial since the intensity of the electromagnetic field in the cavity is particularly high in the center region.

According to several embodiments, the electrically conductive layer comprises an opening in the center region of the electrically conductive layer.

In other words, the predefined center region around the center is provided as explained above but the electrically conductive layer is not only thinner in the center region compared to the surrounding region but is not even present in the center region. This may as well be achieved for example by structuring techniques as described above.

Consequently, the absorption and/or scattering of light by the electrically conductive layer is further reduced in the center region.

According to several embodiments, a maximum lateral extension of the electrically conductive layer is 1000 µm or less or 500 µm or less. For example, the lateral extension lies in the range [1 µm, 1000 µm] or in the range [1 µm, 500 µm] or in the range [1 µm, 200 µm] or in the range [1 µm, 100 µm].

Consequently, the electrical resistance of the electrically conductive layer is reduced. This is particularly beneficial in case a rather thin electrically conductive layer is used since the low thickness tends to increase the resistance. In combination with the low lateral extension, the overall resistance is still in an acceptable range.

In particular, if the radius of curvature of the concave surface part is rather small as mentioned above, the lateral extent of the light field on the mirror is relatively small and therefore the electrically conductive layer may be chosen rather thin.

The lateral extension of the electrically conductive layer corresponds, in particular, to an extension perpendicular to a length direction of the cavity. For example, in case of a plane surface of the substrate, the length direction corresponds to a normal direction to the plane surface. In case of a concave or curved surface, the length direction corresponds for example to a normal direction to a local tangent plane at a local minimum of the concave or curved surface.

According to several embodiments the substrate comprises an optical fiber or a mesa structure.

In case of an optical fiber, the surface of the substrate corresponds, in particular, to an end facet of the optical fiber. In case of a mesa structure, the surface of the substrate corresponds, in particular, to a top surface of the mesa structure.

According to several embodiments the mirror arrangement comprises a terminal for connecting an electrical potential and the electrically conductive layer is electrically connected to the terminal.

The electrical potential may for example be a constant reference potential, such as a ground potential or another constant potential, or may be a varying electrical potential. In this way, the electrically conductive layer may serve at least two purposes at once, namely avoiding trapped charges as well as driving the cavity by applying a respective potential at the terminal and, for example, at a corresponding terminal of the further mirror arrangement.

According to several embodiments, the electrically conductive layer extends beyond the surface of the substrate and partially covers a side surface of the substrate and the electrically conductive layer is connected to the terminal at the side surface.

According to several embodiments, the substrate comprises the optical fiber and the surface of the substrate corresponds to an end facet of the optical fiber. The electrically conductive layer extends beyond the surface of the substrate and partially covers a side surface of the optical fiber and the electrically conductive layer is connected to the terminal at the side surface.

The side surface may be adjacent to the surface, namely the end facet. In other words, the electrically conductive layer wraps around the edges of the substrate. This allows for manufacturing the electrically conductive layer in both regions in a single step and therefore simplifies the manufacturing process.

According to several embodiments, the substrate comprises the mesa structure and the surface of the substrate corresponds to a top surface of the mesa structure. The electrically conductive layer extends beyond the surface of the substrate and partially covers a side surface of the mesa structure and the electrically conductive layer is connected to the terminal at the side surface.

The side surface may be adjacent to the surface, namely the top surface. In other words, the electrically conductive layer wraps around the edges of the substrate. This allows for manufacturing the electrically conductive layer in both regions in a single step and therefore simplifies the manufacturing process.

According to several embodiments, the mirror arrangement comprises a further electrically conductive layer partially covering a side surface of the substrate. The electrically conductive layer is connected to the further electrically conductive layer and the further electrically conductive layer is connected to the terminal at the side surface.

According to several embodiments, the substrate comprises the optical fiber and the surface of the substrate corresponds to the end facet of the optical fiber. The mirror arrangement comprises a further electrically conductive layer partially covering the side surface of the optical fiber. The electrically conductive layer is connected to the further electrically conductive layer and the further electrically conductive layer is connected to the terminal at the side surface.

This is, amongst others, also particularly useful in case of a surface profile where the effective mirror part is plane or concave and the sides are angled as it allows to coat the effective mirror part and also the angled part from the top.

According to several embodiments, the substrate comprises the mesa structure and the surface of the substrate corresponds to the top surface of the mesa structure. The mirror arrangement comprises the further electrically conductive layer partially covering a side surface of the mesa structure. The electrically conductive layer is connected to the further electrically conductive layer and the further electrically conductive layer is connected to the terminal at the side surface.

For example, it may be provided that the electrically conductive layer does not extend beyond the surface of the substrate.

In other words, the electrically conductive layer touches the further electrically conductive layer, for example at the edges of the substrate. This allows for manufacturing the electrically conductive layer and the further electrically conductive layer individually. Thus, different materials, layer thicknesses et cetera may be realized, which allows to adapt the electrically conductive layer and the further electrically conductive layer more specifically to their respective purposes.

According to several embodiments, a reflectivity of the stack of material layers is at least 99.5% or at least 99.9% for light with a specific predefined wavelength λ, wherein λ lies in the range [380 nm, 3000 nm] or in the range [600 nm, 900 nm]. In particular, λ corresponds to a wavelength of laser light to be coupled into the optical resonator.

This can be understood such that the reflectivity is in said range for a single specific predefined wavelength λ in said wavelength ranges but not necessarily for arbitrary values of λ in one of said wavelength ranges. In other words, there exists a λ in the range [380 nm, 3000 nm] or in the range [600 nm, 900 nm], where the reflectivity of the stack of material layers is at least 99.5% or at least 99.9% for light with the wavelength λ. In yet other words, as a function of the wavelength, the reflectivity is 99.5% or larger for one or more wavelengths in the range [380 nm, 3000 nm] or in the range [600 nm, 900 nm] or the reflectivity is 99.9% or larger in the range [380 nm, 3000 nm] or in the range [600 nm, 900 nm].

With such a high reflectivity, a very high finesse of the resulting optical resonator may be achieved. In such applications, the reduction of unwanted electrical fields or field fluctuations as achieved by the invention are particularly beneficial.

According to a further aspect of the invention, an optical resonator for examining and/or manipulating a sample is provided. The optical resonator comprises a first mirror arrangement, which is implemented as a mirror arrangement according to the invention, and a second mirror arrangement. Therein, the first mirror arrangement and the second mirror arrangement are arranged with respect to each other to form an optical cavity of the optical resonator for placing the sample inside the cavity.

For example, the second mirror arrangement comprises a further substrate and a further stack of material layers arranged on a further surface of the further substrate and forming a further optical reflector. For example, the further stack of material layers includes a plurality of further dielectric layers.

The second mirror arrangement is not necessarily implemented according to the invention. For example, the further stack of material layers does not necessarily comprise an electrically conductive layer. However, in some implementations of the optical resonator, the second mirror arrangement is implemented according to the invention and the further stack of material layers comprises a further electrically conductive layer.

In particular, the cavity is formed between the stack of material layers of the first mirror arrangement and a corresponding surface of the second mirror arrangement, for example the further stack of material layers of the second mirror arrangement.

In some embodiments, at least a part of the surface of the substrate is a concave surface part and at least a part of the further surface of the further substrate is a further concave surface part.

In some embodiments, the substrate comprises the optical fiber and the further substrate comprises a further optical fiber.

In some embodiments, the first mirror arrangement and the second mirror arrangement are implemented according to the same embodiment of a mirror arrangement according to the invention.

In some embodiments, the finesse of the optical resonator lies in the range [500 - 150.000].

Further embodiments of the optical resonator according to the invention follow directly from the various embodiments of the mirror arrangement according to the invention and vice versa. In particular, individual features and corresponding explanations as well as advantages relating to the various embodiments of the mirror arrangement according to the invention can be transferred analogously to corresponding embodiments of the optical resonator according to the invention.

According to a further aspect of the invention, a method for examining and/or manipulating a sample using an optical resonator according to the invention is provided. Therein, the sample is placed inside the cavity and light is coupled into the cavity to interact with the sample. The sample is manipulated by the light coupled in the cavity and/or a property of the sample is determined depending on a reflected portion of the light coupled in the cavity and/or depending on a transmitted portion of the light coupled in the cavity and/or depending on a scattered portion of the light coupled in the cavity depending on light emitted from the cavity, in particular in response to the light coupled in the cavity.

According to several embodiments, the light is coupled into the cavity and the reflected and/or transmitted and/or scattered portions and/or the light emitted from the cavity are detected by at least one optical detector to generate a sensor dataset. The sensor dataset is evaluated to determine the property of the sample.

According to several embodiments, the first mirror arrangement comprises the terminal for connecting the electrical potential and the electrically conductive layer is electrically connected to the terminal. A constant electrical potential is applied to the terminal for grounding the electrically conductive layer, for manipulating the sample and/or for examining the sample or a varying electrical potential is applied to the terminal for manipulating the sample and/or for examining the sample.

The constant electrical potential may for example be a ground potential allowing charges in or on the electrically conductive layer to discharge.

According to several embodiments two terminals are provided on two sides of the electrically conductive layer and a magnetic field for manipulating the sample and/or for examining the sample is generated in the cavity by generating a current between the two terminals.

According to several embodiments the electrically conductive layer is structured such that it acts as a coil, wherein two terminals are provided on two sides of the electrically conductive layer, in particular at opposite ends of the coil, and a magnetic field for manipulating the sample and/or for examining the sample is generated in the cavity by generating a current between the two terminals.

As mentioned above, the second mirror arrangement may also be implemented according to the invention and, in particular, such that the second mirror arrangement comprises a further terminal for connecting a further electrical potential and the further electrically conductive layer is electrically connected to the further terminal. Also in case the second mirror arrangement is not implemented according to the invention, it may comprise a further terminal for applying the further electrical potential. The constant or varying electrical potential applied at the terminal may therefore cause a voltage between the electrically conductive layer or the terminal, respectively, and the further terminal of the second mirror arrangement, or a resulting current.

Further embodiments of the method according to the invention follow directly from the various embodiments of the mirror arrangement according to the invention and vice versa. In particular, individual features and corresponding explanations as well as advantages relating to the various embodiments of the mirror arrangement according to the invention can be transferred analogously to corresponding embodiments of the method according to the invention.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- Fig. 1: shows schematically an exemplary embodiment of a mirror arrangement according to the invention;
- Fig. 2: shows schematically a further exemplary embodiment of a mirror arrangement according to the invention;
- Fig. 3: shows schematically a simulated electrical field intensity of a further exemplary embodiment of a mirror arrangement according to the invention;
- Fig. 4: shows schematically a further exemplary embodiment of a mirror arrangement according to the invention;
- Fig. 5: shows schematically a further exemplary embodiment of a mirror arrangement according to the invention;
- Fig. 6: shows schematically a further exemplary embodiment of a mirror arrangement according to the invention;
- Fig. 7: shows schematically a further exemplary embodiment of a mirror arrangement according to the invention;
- Fig. 8: shows schematically a further exemplary embodiment of a mirror arrangement according to the invention;
- Fig. 9: shows schematically a further exemplary embodiment of a mirror arrangement according to the invention;
- Fig. 10: shows schematically a further exemplary embodiment of a mirror arrangement according to the invention;
- Fig. 11: shows schematically a further exemplary embodiment of a mirror arrangement according to the invention;
- Fig. 12: shows schematically an exemplary embodiment of an optical resonator according to the invention; and
- Fig. 13: shows schematically a further exemplary embodiment of an optical resonator according to the invention.

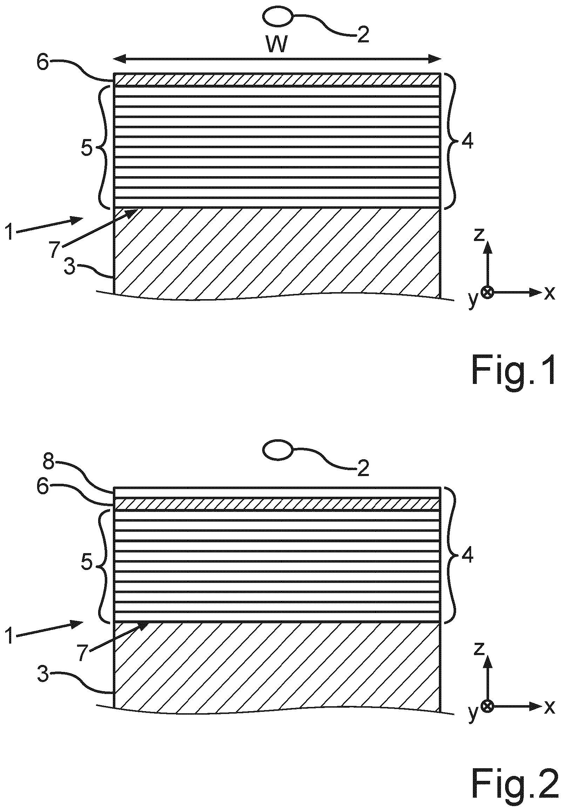

Fig. 1 shows schematically an exemplary embodiment of a mirror arrangement 1 for an optical resonator 13 for examining and/or manipulating a sample 2.

The mirror arrangement 1 comprises a substrate 3 and a stack of material layers 4, wherein the stack of material layers 4 is arranged on a surface 7 of the substrate 3 and forms an optical reflector or, in other words, a mirror. The stack of material layers 4 includes a plurality of dielectric layers 5 and an electrically conductive layer 6.

The substrate 3 may for example be a mesa structure and the surface 7 is a top surface of the mesa structure. The substrate 3 may also correspond to an optical fiber and the surface 7 of the optical fiber is an end facet of the optical fiber.

The surface 7 may for example be a plane surface extending parallel to the x-y plane of a predefined Cartesian coordinate system. The normal direction to the surface 7 is then parallel to the z-direction of the coordinate system. The stack of material layers 4 is arranged on the surface 7 and consequently adopts the surface profile of the surface 7. Consequently, a top surface of the stack of material layers 4 is also plane in the present example.

The plurality of dielectric layers 5 may comprise dielectric layers with different refractive indices. For example, the plurality of dielectric layers 5 may comprise two different types of material layers, one with a higher refractive index than the other. In this case, the layers with the higher and the lower refractive index are arranged alternatingly in the stack of material layers 4. However, also other designs forming an optical reflector, for example a DBR, are possible.

In the example of Fig. 1, the electrically conductive layer 6 forms a final layer or top layer of the stack of material layers 4. The electrically conductive layer 6 may for example be a transparent or essentially transparent layer which may for example be made of ITO or graphene or another transparent or essentially transparent material. In alternative embodiments, the electrically conductive layer 6 may also be a metal layer or a semiconductor layer.

Due to the electrically conductive layer 6, it is avoided that charges are trapped in or on the plurality of dielectric layers 5 and lead to unwanted electrical fields or electrical field fluctuations within the cavity 14 of the optical resonator 13.

In some embodiments a thickness or maximum thickness of the electrically conductive layer 6 is 100 nm or less. More preferably, the thickness or maximum thickness is between 0.1 nm and 10 nm. This is particularly beneficial to reduce the absorption and/or scattering of light from the electrically conductive layer 6.

In some embodiments the low thickness of the electrically conductive layer 6 is combined with a small lateral extension W of the electrically conductive layer 6. For example, a lateral extension W given by a diameter or side length of the electrically conductive layer 6 parallel to the x-y-plane is 500 nm or less or even 200 nm or less. In this way, the electrical resistance of the whole electrically conductive layer 6 is limited.

Fig. 2 shows schematically a further exemplary embodiment of a mirror arrangement 1 according to the invention, which is based on the mirror arrangement 1 of Fig. 1.

As mentioned above, the electrically conductive layer 6 of the mirror arrangement 1 of Fig. 1 presents a final top layer of the stack of material layers 4. In the embodiment of Fig. 2 on the other hand, the stack of material layers 4 comprises a protection layer 8 and the electrically conductive layer 6 is arranged between the plurality of dielectric layers 5 and the protection layer 8.

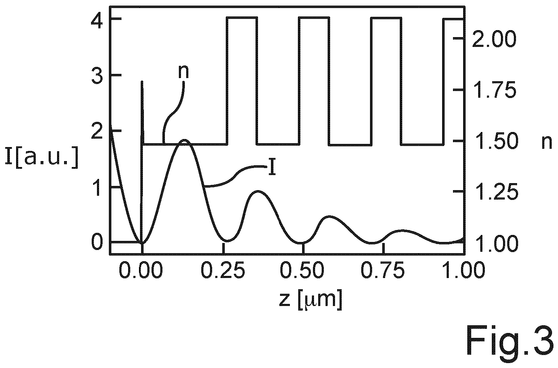

Fig. 3 shows schematically a simulated electrical field intensity I for a further exemplary embodiment of a mirror arrangement 1 according to the invention as well as a corresponding spatial course of the refractive index n of the stack of material layers 4. The intensity I is given in arbitrary units and z is given in µm. In particular, the mirror arrangement 1 is designed as described with respect to Fig. 1. It is noted that positive z denote positions inside the stack of material layers 4 in Fig. 3.

As can be seen from Fig. 3, the alternating arrangement of dielectric layers with high and low refractive index n leads to a rectangular curve for the refractive index n as a function of the longitudinal direction z. The electrically conductive layer 6 is placed at z = 0 by definition and gives rise to a sharp peak in the curve for the refractive index n. The materials and thicknesses of the material layers of the stack of material layers 4 are adjusted such that the resulting electromagnetic field in the cavity 14 has a minimum intensity of I = 0 at the position z = 0 where the electrically conductive layer 6 is located. In this way, the absorption and/or scattering of light by the electrically conductive layer 6 is further decreased.

By reducing the thickness of the electrically conductive layer 6 accordingly, it may be achieved that through the extension of the electrically conductive layer 6 along the z direction, the intensity I is virtually zero or for example always below 0.001 % or even below 0.0001 % percent of the maximum intensity of the electromagnetic field which is equal to 2 in the schematic representation of Fig. 3.

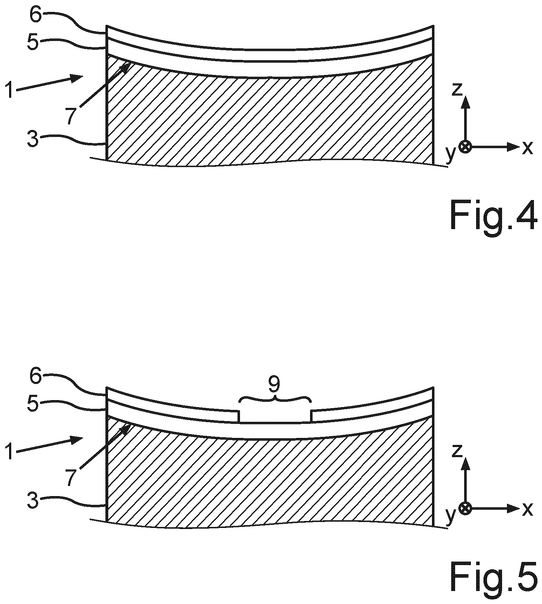

Fig. 4 shows schematically a further exemplary embodiment of a mirror arrangement 1 according to the invention which is based on the mirror arrangement 1 described with respect to Fig. 1. While in the embodiment of Fig. 1 the surface 7 of the substrate 3 and consequently the surface of the stack of material layers 4 have been plane, it is a concave surface in the example of Fig. 4. In this way the dwell time of light inside the cavity 14 of the optical resonator 13 is increased. The substrate 3 may for example be an optical fiber in this embodiment.

FIG. 5 shows schematically a further exemplary embodiment of a mirror arrangement 1 according to the invention which is based on the mirror arrangement 1 of Fig. 4. While in Fig. 4 the thickness of the electrically conductive layer 6 is approximately constant, the thickness of the electrically conductive layer 6 inside a center region 9 around a center of the substrate 3 or the surface 7, respectively, is reduced or even zero. Since the intensity of the electromagnetic field is typically higher in the center region 9 than in the surrounding region of the electrically conductive layer 6, the absorption and/or scattering of light from the electrically conductive layer 6 may be further reduced significantly in this way.

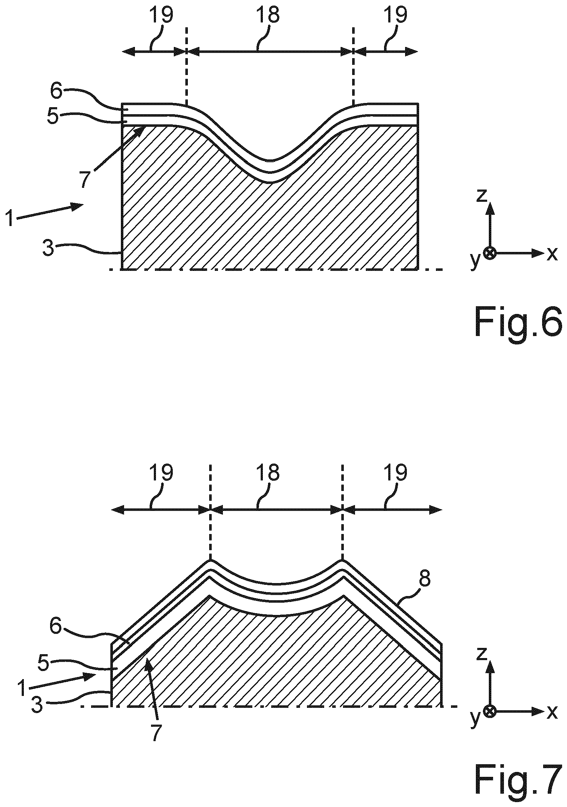

FIG. 6 shows schematically a further exemplary embodiment of a mirror arrangement 1 according to the invention which is based on the mirror arrangement 1 of Fig. 4. In this embodiment, the surface 7 of the substrate 3 and consequently the surface of the stack of material layers 4 has a concave surface part 18, in particular in the center of the optical fiber, and a plane surface part 19 surrounding the concave surface part.

FIG. 7 shows schematically a further exemplary embodiment of a mirror arrangement 1 according to the invention which is based on the mirror arrangement 1 of Fig. 4. In this embodiment, the surface 7 of the substrate 3 and consequently the surface of the stack of material layers 4 has a concave surface part 18, in particular in the center of the optical fiber, and an angled surface part 20 surrounding the concave surface part. Additionally, the stack of material layers 4 comprises for example the protection layer 8 and the electrically conductive layer 6 is arranged between the plurality of dielectric layers 5 and the protection layer 8.

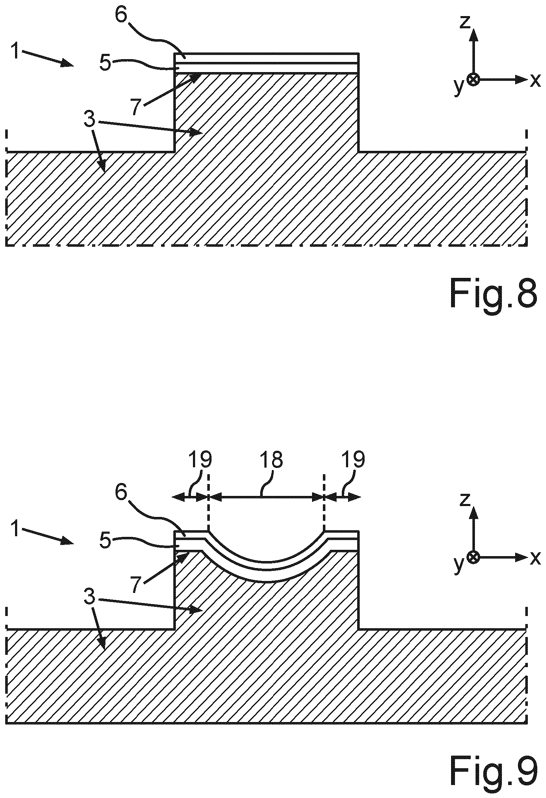

FIG. 8 shows schematically a further exemplary embodiment of a mirror arrangement 1 according to the invention which is based on the mirror arrangement 1 of Fig. 1. In this embodiment, the substrate 3 is a semiconductor forming an elevation in the form of a mesa structure.

FIG. 9 shows schematically a further exemplary embodiment of a mirror arrangement 1 according to the invention which is based on the mirror arrangement 1 of Fig. 8. In this embodiment, the surface 7 of the substrate 3 and consequently the surface of the stack of material layers 4 has a concave surface part 18, in particular in the center of the mesa structure, and a plane surface part 19 surrounding the concave surface part.

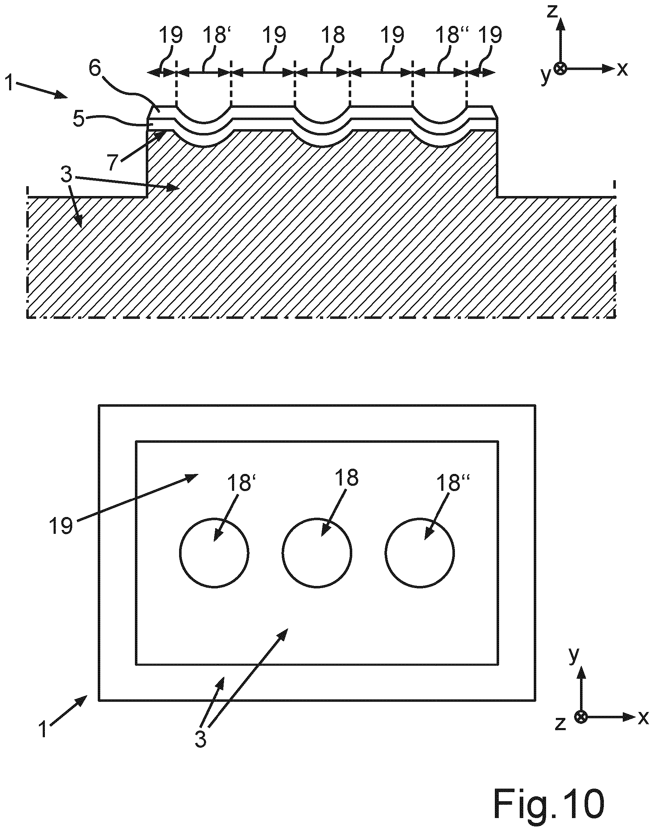

FIG. 10 shows schematically a further exemplary embodiment of a mirror arrangement 1 according to the invention which is based on the mirror arrangement 1 of Fig. 9. In this embodiment, the surface 7 of the substrate 3 and consequently the surface of the stack of material layers 4 has several concave surface parts 18, 18', 18" including for example a centered concave surface part 18 separated by a plane surface part 19, which surrounds the centered concave surface part 18, from two outer concave surface parts 18', 18".

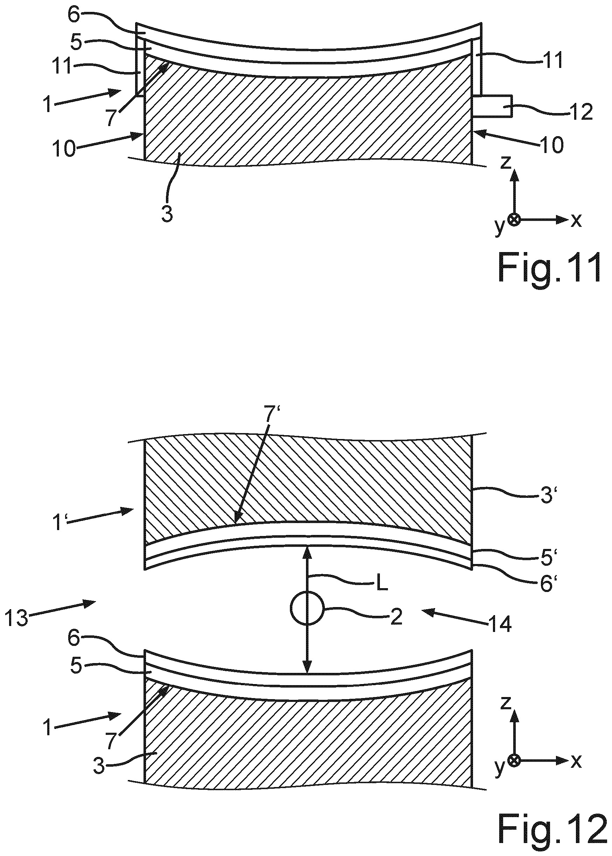

Fig. 11 shows schematically a further exemplary embodiment of a mirror arrangement 1 according to the invention which is for example based on the embodiment of Fig. 4. In the embodiment of Fig. 11 the mirror arrangement 1 comprises a terminal 12 for connecting an electrical potential and the electrically conductive layer 6 is electrically connected to the terminal 12. In the example of Fig. 11 the terminal 12 is arranged on a side surface 10 of the substrate 3 and the mirror arrangement 1 comprises a further electrically conductive layer 11 or another electrical conductor which is connected to the electrically conductive layer 6 for example at an edge of the optical reflector. The further electrically conductive layer 11 or the other conductor is connected to the terminal 12 at the side surface 10 and therefore connects the electrically conductive layer 6 to the terminal 12.

In alternative embodiments the further electrically conductive layer 11 may be replaced by a corresponding portion of the electrically conductive layer 6. In other words in such embodiment the electrically conductive layer 11 extends beyond the surface 7 of the substrate 3 and partially covers the side surface 10 and is directly connected to the terminal 12.

Fig. 12 shows schematically an exemplary embodiment of an optical resonator 13 according to the invention. The optical resonator 13 comprises a first mirror arrangement 1 which is implemented according to the invention for example according to an embodiment as described with respect to Fig. 4. The optical resonator 13 comprises a second mirror arrangement 1'. The first mirror arrangement 1 and the second mirror arrangement 1' are arranged with respect to each other to form the optical cavity 14 of the optical resonator 13 for placing the sample 2 inside the cavity 14.

While the second mirror arrangement 1' is not necessarily implemented according to the invention, this may nevertheless be the case. In the example of Fig. 12, the second mirror arrangement 1' is for example also implemented as described with respect to the embodiment of Fig. 4. Thus, the second mirror arrangement 1' comprises a further stack of material layers including a plurality of further dielectric layers 5', a further electrically conductive layer 6' and a further substrate 3' with a further surface 7' on which the further stack of material layers is arranged.

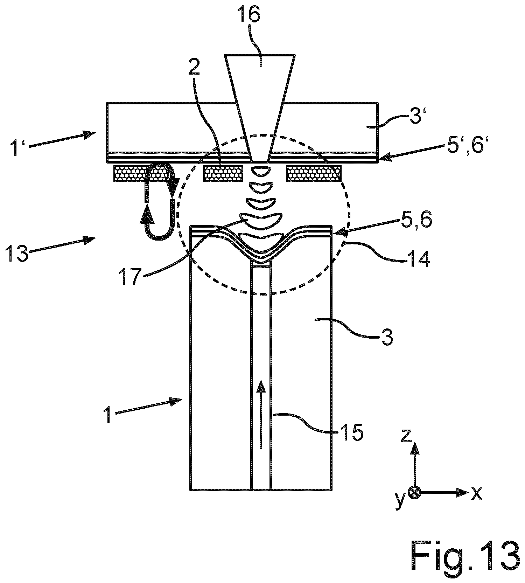

The sample 2 is for example placed inside the cavity 14 and light 15 is coupled into the cavity 14 to interact with the sample 2 (see also Fig. 13). Consequently, the sample 2 may be manipulated by the light 15 and/or a property of the sample 2 may be determined depending on a reflected portion of the light 15 and/or depending on a transmitted portion 16 of the light 15 and/or depending on a scattered portion of the light 15 and/or depending on a transmitted portion of the cavity 14 in response to the light 15 coupled into the cavity 14.

For example, the distance between the mirrors or, in other words, the cavity length L may be tuned in order to achieve resonance with the light 15 such that a cavity mode 17 may form. Due to the reduced risk for creating unwanted electrical fields or field fluctuations inside the cavity 14 due to the electrically conductive layer 6 and, if applicable, the further electrically conductive layer 6' shorter cavity lengths L may be realized.

Fig. 13 shows schematically a further exemplary embodiment of an optical resonator 13 according to the invention, which is based on the optical resonator 13 of Fig. 12. However, while the further surface 7' of the further substrate 3' and consequently the top surface of the further stack of material layers is concave or has a concave part in the example of Fig. 12, the surface of the further substrate 3' of the second mirror arrangement 1' is plane in the embodiment of Fig. 13.

In the embodiment of Fig. 13 the substrate 3 is an optical fiber and the stack of material layers 4 is arranged at an end facet of the optical fiber. The light 15 may therefore be coupled into the cavity 14 directly through a core of the optical fiber.

### Reference signs

- 1, 1': mirror arrangement
- 2: sample
- 3, 3': substrate
- 4: stack of material layers
- 5, 5': dielectric layers
- 6, 6': electrically conductive layers
- 7, 7': surfaces
- 8: protection layer
- 9: center region
- 10: side surface
- 11: electrically conductive layer
- 12: terminal
- 13: optical resonator
- 14: cavity
- 15: light
- 16: transmitted portion of light
- 17: cavity mode
- 18, 18', 18": concave surface parts
- 19: plane surface part
- 20: angled surface part

## Claims

1. Mirror arrangement (1) for an optical resonator (13) for examining and/or manipulating a sample (2), wherein
- the mirror arrangement (1) comprises a substrate (3) and a stack of material layers (4) arranged on a surface (7) of the substrate (3) and forming an optical reflector;
- the stack of material layers (4) includes a plurality of dielectric layers (5); and
- the stack of material layers (4) comprises an electrically conductive layer (6).

2. Mirror arrangement (1) according to claim 1, wherein at least a part of the surface (7) of the substrate (3) is a concave surface part (18, 18').

3. Mirror arrangement (1) according to claim 2, wherein a maximum radius of curvature of the concave surface part (18, 18') is 1000 µm or less.

4. Mirror arrangement (1) according to one of the preceding claims, wherein
- the electrically conductive layer (6) is a final layer of the stack of material layers (4) and is arranged on a side of the stack of material layers (4) opposite to the substrate (3); or
- the stack of material layers (4) comprises at least one protection layer (8), wherein one of the at least one protection layer (8) is a final layer of the stack of material layers (4) and is arranged on a side of the stack of material layers (4) opposite to the substrate (3) and the electrically conductive layer (6) is adjacent to the at least one protection layer (8).

5. Mirror arrangement (1) according to one of the preceding claims, wherein the electrically conductive layer (6) is arranged at a position such that an intensity of an electromagnetic field in the optical resonator (13) is less than 30 % or less than 20 % or less than 10 % of a maximum intensity of the electromagnetic field.

6. Mirror arrangement (1) according to one of the preceding claims, wherein a maximum thickness of the electrically conductive layer (6) is 100 nm or less or the maximum thickness is equal to or less than a tenth of a predefined wavelength of light (15) for examining and/or manipulating the sample (2).

7. Mirror arrangement (1) according to one of the preceding claims, wherein
- a thickness of the electrically conductive layer (6) in a center region (9) of the electrically conductive layer (6) is less than a thickness of the electrically conductive layer (6) outside of the center region (9); or
- the electrically conductive layer (6) comprises an opening in a center region (9) of the electrically conductive layer (6).

8. Mirror arrangement (1) according to one of the preceding claims, wherein a maximum lateral extension of the electrically conductive layer (6) is 500 µm or less.

9. Mirror arrangement (1) according to one of the preceding claims, wherein the substrate (3) comprises an optical fiber or a mesa structure.

10. Mirror arrangement (1) according to one of the preceding claims comprising a terminal (12) for connecting an electrical potential and the electrically conductive layer (6) is electrically connected to the terminal (12).

11. Mirror arrangement (1) according to claim 10, wherein
- the electrically conductive layer (6) extends beyond the surface (7) of the substrate (3) and partially covers a side surface (10) of the substrate (3) and the electrically conductive layer (6) is connected to the terminal (12) at the side surface (10); or
- the mirror arrangement (1) comprises a further electrically conductive layer (11) partially covering a side surface (10) of the substrate (3), the electrically conductive layer (6) is connected to the further electrically conductive layer (11) and the further electrically conductive layer (11) is connected to the terminal (12) at the side surface (10).

12. Mirror arrangement (1) according to one of the preceding claims, wherein the electrically conductive layer (6) is a layer of a transparent electrically conductive material or a graphene layer or a metal layer or a semiconductor layer.

13. Mirror arrangement (1) according to one of the preceding claims, wherein a reflectivity of the stack of material layers (4) for light (15) with a predefined wavelength λ, wherein λ lies in the range [280 nm, 3000 nm] is at least 99.5% or at least 99.9%.

14. Optical resonator (13) for examining and/or manipulating a sample (2) comprising a first mirror arrangement (1), which is a mirror arrangement (1) according to one of the preceding claims, and a second mirror arrangement (1'), wherein the first mirror arrangement (1) and the second mirror arrangement (1') are arranged with respect to each other to form an optical cavity (14) of the optical resonator (13) for placing the sample (2) inside the cavity (14).

15. Optical resonator (13) according to claim 14, wherein a finesse of the optical resonator (13) lies in the range [500 - 150.000].

16. Method for examining and/or manipulating a sample (2) using an optical resonator (13) according to one of claims 14 or 15, wherein the sample (2) is placed inside the cavity (14), light (15) is coupled into the cavity (14) to interact with the sample (2), and
- the sample (2) is manipulated by the light (15); and/or
- a property of the sample (2) is determined depending on a reflected portion of the light (15) and/or depending on a transmitted portion (16) of the light (15) and/or depending on a scattered portion of the light (15) and/or depending on light emitted from the cavity (14).

17. Method according to claim 16, wherein the first mirror arrangement (1) is implemented according to one of claims 10 or 11 and
- a constant electrical potential is applied to the terminal (12); or
- a varying electrical potential is applied to the terminal (12) for manipulating the sample (2) and/or for examining the sample (2).
